# FASCICULE DE BREVET EUROPEEN

(11) **EP 3 625 069 B1**
(45) Date de publication et mention de la délivrance du brevet: **24.08.2022**
(21) Numéro de dépôt: 18729048.1
(22) Date de dépôt: 17.05.2018
(51) Int. Cl.: B60H 1/00, B60H 1/32

(54) **PROCÉDÉ ET SYSTÈME DE TRAITEMENT DE L'AIR D'UN HABITÂCLE D'UN VÉHICULE ÉLECTRIQUE, ET VÉHICULE ÉLECTRIQUE METTANT EN OEUVRE UN TEL PROCÉDÉ OU SYSTÈME**
VERFAHREN UND SYSTEM ZUR KLIMATISIERUNG DER LUFT IN EINEM FAHRGASTRAUM EINES ELEKTROFAHRZEUGS UND ELEKTROFAHRZEUG ZUR IMPLEMENTIERUNG EINES SOLCHEN VERFAHRENS ODER SYSTEMS
METHOD AND SYSTEM FOR CONDITIONING THE AIR IN A PASSENGER COMPARTMENT OF AN ELECTRIC VEHICLE, AND ELECTRIC VEHICLE IMPLEMENTING SUCH A METHOD OR SYSTEM

(30) Priorité: 18.05.2017 FR 1754396
(43) Date de publication de la demande: 25.03.2020
(73) Titulaire: Bluebus, 29500 Ergue Gaberic (FR)
(72) Inventeur: DESNEUX, Alexandre, 69720 Saint Laurent De Mure (FR); BARDOT, Christophe, 78180 Montigny Le Bretonneux (FR); DURAND, Fabien, 69150 Decines (FR); MATHIEUX, Alexandre, 69008 Lyon (FR); SUAUD, Freddy, 69780 Mions (FR)
(74) Mandataire: IPAZ
(86) Numéro de dépôt international: PCT/EP2018/062888
(87) Numéro de publication internationale: WO 2018/211006

(56) Documents cités:
- DE-A1-102014 222 864
- JP-A- H11 105 537
- US-A1- 2008 067 962
- US-A1- 2013 020 864

## Description

La présente invention concerne un procédé de traitement de l'air d'un habitacle d'un véhicule électrique, en particulier d'un véhicule électrique dont l'ensemble de l'énergie pour le mouvoir est fourni par une source d'énergie électrique embarquée rechargeable depuis une source extérieure. Elle concerne également un système mettant en œuvre un tel procédé et un véhicule électrique, en particulier de type bus, mettant en œuvre un tel procédé ou un tel système.

Le domaine de l'invention est le domaine des systèmes de traitement de l'air d'un habitacle d'un véhicule électrique, et en particulier d'un véhicule électrique dans lequel l'ensemble de l'énergie pour le mouvoir est fourni par une source d'énergie électrique embarquée rechargeable depuis une source extérieure.

### État de la technique

Un des moyens de transport en commun le plus prisé est le bus car sa mise en place ne nécessite pas d'infrastructure spécifique, de type voie ferrée par exemple. Pour diminuer la pollution liée aux transports en commun, les bus électriques font leur apparition encouragée à la fois par la prise de conscience des utilisateurs mais également par des mesures administratives incitatives favorisant l'achat et l'utilisation des véhicules électriques. On assiste également à l'apparition et au développement des tram-bus. Ainsi, le nombre de bus, électriques ou non, augmente sans cesse.

Pour les bus électriques alimentés par des batteries rechargeables depuis une source extérieure, par contraste avec les bus hybrides, l'autonomie est un point clef. Pour augmenter l'autonomie de ces bus, une chaudière à combustion est utilisée pour le chauffage de l'habitacle. Ainsi, l'énergie nécessaire au chauffage de l'habitacle n'est pas prélevée sur les batteries. On connait par exemple des documents US 2008/067962 A1 et JP H11 105537 des procédés de traitement dans un véhicule utilisant d'une part une source d'énergie externe et d'autre part une source d'énergie embarquée.

Or, la chaudière à combustion ne peut pas être utilisée tout le temps, par exemple lorsque le véhicule est au garage. De plus, une chaudière à combustion augmente la pollution générée par le véhicule électrique et la consommation en carburant dudit véhicule.

Un but de la présente invention est de remédier à ces inconvénients.

Un autre but de l'invention est de proposer un procédé et un système de traitement de l'air de l'habitacle d'un véhicule électrique pouvant être utilisés, même lorsque le véhicule est à l'arrêt.

Il est aussi un but de l'invention de proposer un procédé et un système de traitement de l'air de l'habitacle d'un véhicule électrique générant moins de pollution.

Encore un autre but de l'invention est de proposer un procédé et un système de traitement de l'air de l'habitacle diminuant la consommation en carburant dudit véhicule électrique.

### Exposé de l'invention

L'invention permet d'atteindre au moins l'un de ces buts par un procédé de traitement de l'air de l'habitacle d'un véhicule électrique selon la revendication 1.

Ainsi, le procédé selon l'invention propose de réaliser une phase préliminaire de traitement d'air dans le véhicule, à partir d'une source électrique extérieure au véhicule, lorsque le véhicule est relié à ladite source électrique extérieure, telle que le secteur par exemple. Dans ce cas, le ou les dispositifs de traitement d'air sont alimentés par la source électrique extérieure, directement ou par l'intermédiaire des batteries du véhicule. Une telle situation peut se produire lorsque le véhicule est à l'arrêt, pour le rechargement de ses batteries, ou lorsque le véhicule est dans une phase de garage en attente d'utilisation. Puis, lorsque le véhicule est débranché pour être utilisé, sur route par exemple, le traitement d'air dans le véhicule est assuré à partir d'une source fossile embarquée dans le véhicule, et en particulier dédiée au traitement d'air, de sorte que le traitement d'air ne consomme pas d'énergie électrique emmagasinée dans les batteries du véhicule électrique.

Par conséquent, grâce au procédé selon l'invention, l'air se trouvant dans l'habitacle d'un véhicule électrique peut être traité même lorsque le véhicule est à l'arrêt, et ce tout en diminuant la pollution générée par le véhicule électrique et la consommation en carburant dudit véhicule électrique.

Dans la présente demande, par traitement d'air on entend toute modification de l'air, excepté le chauffage. En particulier, le traitement d'air peut être un refroidissement, et/ou un rafraichissement, et/ou une déshumidification, et/ou une désodorisation, etc.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Selon l'invention, l'étape préliminaire réalise un traitement de l'air uniquement, ou d'abord ou encore en priorité, dans une zone conducteur du véhicule, également appelée poste de pilotage.

Suivant un mode de réalisation, l'étape préliminaire peut réaliser un traitement de l'air uniquement dans une zone conducteur dudit véhicule.

Suivant un autre mode de réalisation, l'étape préliminaire peut réaliser un traitement de l'air d'abord dans une zone conducteur dudit véhicule, puis dans une zone passager, en même temps que, ou après, le traitement de l'air dans la zone conducteur.

Suivant encore un autre mode de réalisation, l'étape préliminaire peut réaliser un traitement de l'air en priorité dans une zone conducteur dudit véhicule. Dans ce mode de réalisation, lors de l'étape préliminaire, les zones conducteur et passager peuvent être traitées en même temps avec une priorité à la zone conducteur.

Par exemple, des coefficients de pondération peuvent être attribués à chacune des zones conducteur et passager, de sorte que la zone conducteur bénéficie d'une puissance de traitement supérieure à celle de la zone passager.

Préférentiellement, le coefficient de pondération de chaque zone peut être utilisé pour pondérer la puissance du traitement fourni par le dispositif de traitement d'air.

Suivant un exemple de réalisation nullement limitatif, lors de l'étape préliminaire, la zone conductrice peut bénéficier de 80% de la puissance de traitement fourni par le dispositif de traitement d'air et la zone passager des 20% restants.

Selon l'invention, l'étape principale peut concerner uniquement, ou d'abord, une partie de l'habitacle du véhicule.

Alternativement, l'étape principale peut concerner la totalité de l'habitacle du véhicule.

Le procédé selon l'invention peut avantageusement comprendre une étape de déclenchement, en particulier à distance du véhicule, de l'étape préliminaire.

Une telle étape préliminaire de traitement d'air peut être déclenchée par une minuterie intégrée au véhicule.

Alternativement, une telle étape préliminaire de traitement d'air peut être déclenchée par un appareil distant, par exemple un serveur distant ou un appareil utilisateur portable, au travers d'un réseau de communication sans fil ou filaire. Une telle étape préliminaire de traitement d'air peut également être déclenchée par une borne de rechargement électrique à laquelle le véhicule est relié.

La connexion entre le serveur et/ou la borne de rechargement peut être réalisée de manière filaire, par exemple grâce au fil pilote d'un câble de rechargement reliant ledit véhicule à ladite borne de rechargement. Alternativement, la connexion entre le serveur et/ou la borne de rechargement et/ou l'appareil utilisateur peut être réalisée de manière sans fil, par exemple au travers d'un réseau de communication sans fil, tel que le réseau utilisé pour la téléphonie mobile.

L'étape préliminaire de traitement d'air peut, alternativement ou en plus, être déclenchée automatiquement en fonction de l'un au moins des paramètres suivants :
- une heure prédéterminée,
- une durée prédéterminée avant la prise dudit véhicule, suite par exemple à une phase de repos/garage du véhicule,
- une température extérieure,
- une température intérieure dans l'au moins une partie de l'habitacle,
- un taux d'humidité extérieure, et
- un taux d'humidité intérieure dans l'au moins une partie de l'habitacle.

Suivant un exemple de réalisation nullement limitatif, l'étape préliminaire de traitement d'air peut être déclenchée, lorsque le conducteur vient prendre le véhicule, par exemple le matin, par exemple 30 minutes avant l'heure de prise du véhicule.

Dans certains cas, l'étape principale de traitement d'air peut en outre être réalisée à partir d'au moins une batterie du véhicule, en plus de la source électrique fossile embarquée dans ledit véhicule.

Dans ce cas, les batteries du véhicule viennent amener un complément d'énergie à celle fournie par la source fossile de manière continue ou temporaire, par exemple lorsque la source fossile est insuffisante, en fonction de la température, et/ou du taux d'humidité, demandée dans l'habitacle.

Avantageusement, l'étape préliminaire de traitement d'air peut être réalisée sans démarrage du ou des moteurs électriques du véhicule électrique.

Autrement dit, l'étape préliminaire de traitement d'air peut être complètement indépendante de l'utilisation du ou des moteurs électriques pour faire rouler le véhicule électrique.

L'étape principale peut être déclenchée, de manière automatisée, lorsque :
- l'étape préliminaire est arrêtée,
- le véhicule se met en mouvement,
- le véhicule est débranché de la source électrique extérieure, et/ou
- la température, respectivement le taux d'humidité, à l'intérieur de l'au moins une partie de l'habitacle qui a été traitée lors de l'étape préliminaire atteint une valeur prédéterminée ;
tout de suite ou éventuellement après une durée prédéterminée suite à l'un au moins de ces événements.

Le déclenchement de l'étape principale de traitement d'air peut en plus être conditionné à une confirmation manuelle de la part d'un opérateur ou d'un conducteur dudit véhicule.

Alternativement, l'étape principale de traitement d'air peut être déclenchée de manière manuelle, par exemple par un conducteur dudit véhicule.

L'étape préliminaire peut être arrêtée, de manière automatisée, lorsque :
- l'étape principale est déclenchée,
- le véhicule se met en mouvement,
- le véhicule est débranché d'une source électrique extérieure, et/ou
- la température, respectivement le taux d'humidité, à l'intérieur de l'au moins une partie de l'habitacle qui été traité lors de l'étape préliminaire atteint une valeur prédéterminée ;
tout de suite ou éventuellement après une durée prédéterminée suite à l'un au moins de ces événements.

L'arrêt de l'étape préliminaire peut en plus être conditionné à une confirmation manuelle de la part d'un opérateur ou d'un conducteur dudit véhicule.

Alternativement, l'étape préliminaire peut être arrêtée de manière manuelle, par exemple par un conducteur dudit véhicule.

Avantageusement, l'étape préliminaire et l'étape principale peuvent être réalisées par transfert d'énergie thermique vers un fluide caloporteur, en particulier dans le cas d'un refroidissement, ou rafraîchissement d'air.

Dans ce cas, le fluide caloporteur pour l'étape principale et l'étape préliminaire peut être un même et unique fluide caloporteur.

Le fluide caloporteur peut être de l'eau ou un gaz frigorifique.

La source électrique fossile, embarquée dans le véhicule, peut être dédiée au(x) dispositif(s) de traitement d'air.

La source électrique fossile peut être un générateur électrique alimenté par un carburant de type essence ou gasoil, ou par du bio-carburant.

Suivant un autre aspect de l'invention, il est proposé un système de traitement de l'air dans l'habitacle d'un véhicule électrique, comprenant :
- au moins une unité de traitement d'air électrique,
- au moins une source d'énergie électrique fossile, telle qu'un générateur électrique alimenté par un réservoir de carburant fossile ;
configurés pour mettre en œuvre toutes les étapes du procédé selon l'invention.

Dans le cas où, le traitement de l'air est un refroidissement d'air, l'unité de traitement d'air peut être une unité de climatisation comprenant, en particulier, un compresseur et un condenseur.

Dans ce cas, le traitement de l'air peut être réalisé par l'intermédiaire d'un fluide caloporteur, tel qu'un fluide frigorifique, bien connu de l'homme du métier.

Dans ce mode de réalisation, le système selon l'invention peut comprendre :
- un circuit pour faire circuler ledit fluide dans l'habitacle du véhicule, et
- au moins un évaporateur, également appelé terminal dans la suite de la demande, relié audit circuit.

Suivant un autre aspect de la même invention, il est proposé un véhicule électrique comprenant :
- un système de traitement d'air selon l'invention ; ou
- des moyens pour mettre en œuvre toutes les étapes du procédé selon l'invention.

Le véhicule électrique selon l'invention peut en particulier être un véhicule électrique terrestre de transport en commun, en particulier sur rail ou sur route, par exemple de type bus, car ou tram-bus.

Le véhicule selon l'invention peut comprendre un ou plusieurs modules de stockage d'énergie électrique rechargeable depuis une source externe, telle que le secteur.

Chaque module de stockage d'énergie électrique rechargeable peut comprendre une ou plusieurs batterie(s), ou supercapacité(s), rechargeables.

Pour ce faire, le véhicule est muni d'au moins une prise et/ou d'un câble de rechargement électrique. Un tel câble et/ou une telle prise peu(ven)t comprendre un fil pilote permettant de :
- communiquer avec le véhicule, et/ou
- détecter le branchement et/ou le débranchement dudit véhicule à une source électrique externe.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple non limitatif d'un véhicule électrique selon l'invention ;
- la FIGURE 2 est une représentation schématique d'un exemple non limitatif d'un procédé selon l'invention ;
- la FIGURE 3 est une représentation schématique d'un exemple non limitatif d'un système de traitement d'air selon l'invention ; et
- la FIGURE 4 est une représentation schématique partielle du véhicule de la FIGURE 1 avec le système de la FIGURE 3.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques entre dans l'objet de l'invention tel que défini par les revendications, et qu'elle est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

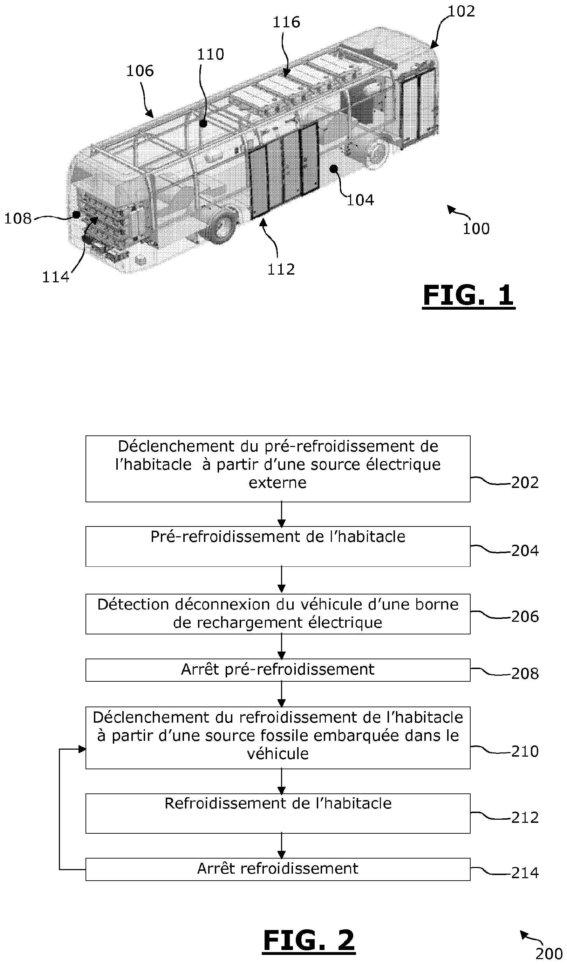

La FIGURE 1 est une représentation schématique d'un exemple non limitatif d'un véhicule électrique selon l'invention.

Le véhicule électrique 100 représenté sur la FIGURE 1 est un bus électrique comportant un habitacle délimité par une paroi avant 102, deux parois latérales longitudinales 104 et 106, une paroi arrière 108, une paroi supérieure 110 et une paroi inférieure 112.

Le bus électrique comporte un ou plusieurs moteurs électriques (non représentés), des modules 114, dits arrière, de stockage d'énergie électrique, disposés du côté de la paroi arrière 108. Le bus 100 comprend en outre des modules 116, dits supérieurs, de stockage d'énergie électrique, disposés dans un logement aménagé dans la paroi supérieure 110 du bus 100.

Le bus électrique 100 est mis en mouvement exclusivement par l'énergie électrique fournie par les modules de stockage d'énergie électriques 114 et 116, qui peuvent être des batteries ou des supercapacités.

Les modules de stockage d'énergie électrique 114 et 116 sont rechargés depuis une source électrique externe, par exemple par l'intermédiaire d'un câble de rechargement ou d'un pantographe, comprenant éventuellement un fil pilote.

La FIGURE 2 est une représentation schématique d'un exemple non limitatif d'un procédé selon l'invention, dans le cas particulier d'un refroidissement d'air.

Le procédé 200, représenté sur la FIGURE 2, comprend une étape 202 de déclenchement d'une étape de préliminaire de refroidissement, également appelé pré-refroidissement du poste de pilotage, par exemple du bus 100 de la FIGURE 1. L'étape de pré-refroidissement est réalisée par une unité de climatisation, alimentée par une source d'électricité externe au véhicule à laquelle ledit véhicule est branché, telle que par exemple le secteur, directement ou par l'intermédiaire d'une ou plusieurs batteries.

L'étape 202 de déclenchement comprend une mise en route de l'unité de climatisation.

L'étape de déclenchement est réalisée de manière automatisée, par exemple par une minuterie intégrée au véhicule et commandant l'alimentation de l'unité de climatisation.

Alternativement, le déclenchement de l'étape de pré-refroidissement peut être réalisé par un serveur distant ou par une borne de rechargement. La connexion entre le serveur et/ou la borne de rechargement peut être réalisée de manière filaire, par exemple grâce au fil pilote d'un câble de rechargement reliant ledit véhicule à ladite borne de rechargement.

Alternativement, la connexion entre le serveur et/ou la borne de rechargement peut être réalisée de manière sans fil, par exemple au travers d'un réseau de communication sans fil, tel que le réseau de communication utilisé pour la téléphonie mobile.

Suivant un exemple de réalisation, l'étape de pré-refroidissement est déclenchée 15 minutes avant l'heure de prise du véhicule en vue de son utilisation, après une étape de repos du véhicule.

Le déclenchement du pré-refroidissement du véhicule peut être conditionné à une détection de branchement dudit véhicule sur une source électrique externe. Une telle détection de branchement peut être réalisée par l'intermédiaire d'un fil pilote du câble de rechargement, ou de la borne de rechargement, du véhicule électrique.

Une étape 204 réalise le pré-refroidissement d'au moins une partie, ou de la totalité, de l'habitacle du véhicule par l'unité de climatisation, au travers d'un ou plusieurs terminaux, ou évaporateurs, distribués dans le véhicule. L'étape de pré-refroidissement est réalisée jusqu'à atteindre une température prédéterminée, par exemple de 25°C, et tant que le véhicule électrique reste branché à la source électrique externe. En effet, l'unité de climatisation est alimentée par la source électrique externe.

Le pré-refroidissement est réalisé par l'intermédiaire d'un fluide frigorifique, tel qu'un gaz frigorifique. Les frigories emmagasinées par le fluide sont ensuite introduites dans au moins une partie de l'habitacle, tel que le poste de conduite, grâce à un ou plusieurs évaporateurs.

Une étape 206 détecte le débranchement du véhicule de la source électrique externe. Une telle détection peut être réalisée, de manière automatisée, en utilisant le fil pilote du câble de rechargement, ou de la borne de rechargement, du véhicule électrique.

Suite à une détection de débranchement, une étape 208 réalise un arrêt de l'étape de pré-refroidissement réalisée grâce à l'énergie fournie par la source externe.

Suite à l'arrêt du pré-refroidissement, une étape 210 réalise un déclenchement d'une étape principale de refroidissement, également appelée refroidissement, soit de la partie de l'habitacle qui a été pré-refroidie lors de l'étape 204, soit de la totalité de l'habitacle, avec comme source d'énergie une source fossile embarquée dans le véhicule, telle que par exemple un groupe électrogène fonctionnant au biocarburant. Cette étape de refroidissement est réalisée tant que la température dans l'habitacle est supérieure à une température souhaitée, par exemple de 21°C. L'étape 210 de déclenchement de l'étape de refroidissement peut être conditionnée à la réalisation d'au moins une condition additionnelle telle que la mise en mouvement du véhicule, ou une confirmation manuelle de la part du conducteur, ou l'absence de branchement du véhicule à une source électrique externe, etc.

Une étape 212 réalise alors le refroidissement soit de la partie de l'habitacle qui a été pré-refroidie lors de l'étape 204, soit de la totalité de l'habitacle, avec l'énergie fournie par le groupe électrogène, et ce pour atteindre une température souhaitée pré-renseignée et tant que la ou les conditions additionnelles énoncées plus haut sont respectées.

Le refroidissement est réalisé par l'intermédiaire de la même unité de climatisation et du même fluide frigorifique que ceux utilisés pour le pré-refroidissement.

Lorsque la température souhaitée est atteinte, ou lorsqu'une des conditions additionnelles n'est pas respectée, ou encore sur demande du conducteur, une étape 214 arrête l'étape de refroidissement.

Les étapes 210-214 sont ensuite réitérées aussi souvent que nécessaire pour maintenir une température souhaitée dans l'habitacle du véhicule électrique.

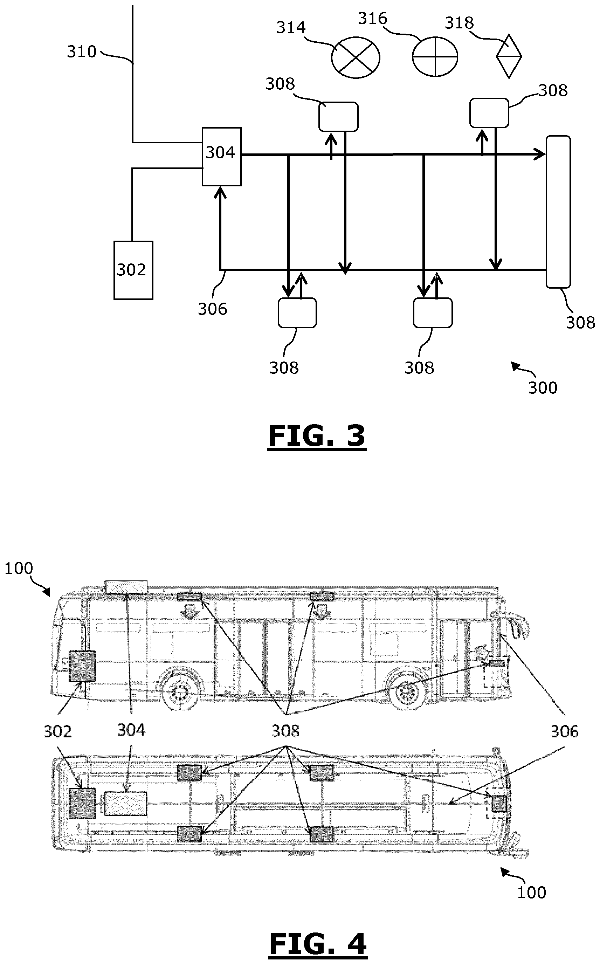

La FIGURE 3 est une représentation schématique d'un exemple non limitatif d'un système selon l'invention.

Le système 300 représenté sur la FIGURE 3 comprend un générateur électrique 302 pour générer de l'électricité à partir d'un carburant fossile, tel que par exemple du gasoil, de l'essence ou du bio-carburant.

Le système 300 comprend en outre une unité de climatisation 304, comprenant un condenseur et un compresseur, et associée à un circuit de refroidissement 306 dans lequel circule un fluide frigorifique. Le système comprend en outre, relié au circuit de refroidissement 306, un ou plusieurs évaporateurs 308, répartis dans l'habitacle du véhicule pour transférer les calories de l'air se trouvant dans l'habitacle du véhicule au fluide frigorifique.

Le système 300 comprend en outre un moyen 314 de prise d'air neuf dans l'habitacle, un moyen 316 d'extraction d'air vicié hors de l'habitacle, ainsi qu'un thermomètre 318, ou équivalent, pour mesurer et communiquer la température.

Le système comprend en outre un module central (non représenté), tel qu'une carte électronique, un processeur ou équivalent, pour déclencher et arrêter l'unité de climatisation 304 et les évaporateurs 308, en particulier de manière individuelle.

Lors de l'étape préliminaire de refroidissement, c'est-à-dire lors de l'étape du pré-refroidissement, l'unité de climatisation 304 et les évaporateurs 308 sont alimentés par une source extérieure au véhicule, telle que par exemple une borne de charge, matérialisée par la ligne 310.

Lors de l'étape principale, l'unité de climatisation 304 et les évaporateurs 308 sont alimentés par le générateur électrique 302.

La FIGURE 4 est une représentation schématique partielle du bus de la FIGURE 1 avec le système de la FIGURE 3, selon une vue latérale et une vue de dessus.

Tel que représenté sur la FIGURE 4, le circuit frigorifique 306 parcourt la majeure partie du véhicule 100 dans le sens de la longueur, par exemple sensiblement dans une partie centrale du toit du véhicule 100, de sorte qu'il est sensiblement agencé à égale distance des parois latérales du véhicule 100.

Le générateur électrique 302 est agencé en partie arrière du bus, par exemple dans un module arrière du bus, et l'unité de climatisation 304 est disposée en partie arrière du véhicule, par exemple sur le toit du bus.

Un évaporateur 308, est disposé dans le poste de conduite à l'avant du bus. Les autres évaporateurs thermiques 308 sont agencés dans le plafond de l'habitacle, et plus particulièrement dans l'épaisseur du plafond de l'habitacle, tout le long du véhicule, à proximité des parois latérales du bus.

Bien entendu, l'invention n'est pas limitée aux exemples qui viennent d'être décrits, mais est définie par les revendications.

## Revendications

1. Procédé (200) de traitement de l'air de l'habitacle d'un véhicule électrique (100) dans lequel l'ensemble de l'énergie pour le mouvoir est fourni par une source d'énergie électrique embarquée rechargeable depuis une source extérieure, ledit procédé (200) comprenant :
- une étape (204), dite préliminaire, réalisant un traitement de l'air dans au moins une partie dudit habitacle par au moins un dispositif de traitement d'air (304, 308) alimenté par une source électrique (310) extérieure audit véhicule (100), lorsque ledit véhicule (100) est relié à ladite source électrique extérieure, et
- une étape (212), dite principale, réalisant un traitement de l'air dans ladite au moins une partie dudit habitacle par au moins un dispositif de traitement d'air (304, 308) alimenté par une source d'énergie électrique alimentée par un réservoir de carburant fossile (302), embarquée dans ledit véhicule (100), lors de l'utilisation dudit véhicule (100) ;
**caractérisé en ce que** l'étape préliminaire (204) réalise un traitement de l'air uniquement, ou d'abord, ou encore en priorité, dans une zone conducteur dudit véhicule (100).

2. Procédé (200) selon la revendication précédente, **caractérisé en ce qu'**il comprend une étape (202) de déclenchement, en particulier à distance du véhicule (100), de l'étape préliminaire (204).

3. Procédé (200) selon l'une quelconque des revendications précédentes, **caractérisé en ce que** l'étape principale (212) est en outre réalisée à partir d'au moins une batterie (116) du véhicule (100), en plus de la source électrique fossile embarquée (302).

4. Procédé (200) selon l'une quelconque des revendications précédentes, **caractérisé en ce que** l'étape préliminaire (204) est réalisée sans démarrage du ou des moteurs électriques dudit véhicule électrique (100).

5. Procédé (200) selon l'une quelconque des revendications précédentes, **caractérisé en ce que** l'étape préliminaire (204) est déclenchée automatiquement en fonction de l'un au moins des paramètres suivants :
- une heure prédéterminée,
- une durée prédéterminée avant la prise dudit véhicule, suite par exemple à une phase de repos/garage du véhicule,
- une température extérieure,
- une température intérieure dans l'au moins une partie de l'habitacle,
- un taux d'humidité extérieure,
- un taux d'humidité intérieure dans l'au moins une partie de l'habitacle.

6. Procédé (200) selon l'une quelconque des revendications précédentes, **caractérisé en ce que** l'étape principale (212) est déclenchée, de manière automatisée, lorsque :
- l'étape préliminaire (204) est arrêtée,
- le véhicule (100) se met en mouvement,
- le véhicule (100) est débranché de la source électrique extérieure, et/ou
- la température, respectivement le taux d'humidité, à l'intérieur de l'au moins une partie de l'habitacle qui a été traitée lors de l'étape préliminaire atteint une valeur prédéterminée ;
tout de suite ou éventuellement après une durée prédéterminée suite à l'un au moins de ces événements.

7. Procédé (200) selon l'une quelconque des revendications précédentes, **caractérisé en ce que** l'étape préliminaire (204) est arrêtée, de manière automatisée, lorsque:
- l'étape principale (212) est déclenchée,
- le véhicule (100) se met en mouvement,
- le véhicule (10) est débranché de la source électrique extérieure, et/ou
- la température, respectivement le taux d'humidité, à l'intérieur de l'au moins une partie de l'habitacle qui été traitée lors de l'étape préliminaire atteint une valeur prédéterminée ;
tout de suite ou éventuellement après une durée prédéterminée suite à l'un au moins de ces événements.

8. Procédé (200) selon l'une quelconque des revendications 1 à 4, **caractérisé en ce que** le déclenchement de l'étape principale (212), respectivement l'arrêt de l'étape préliminaire (204), est conditionné à une confirmation manuelle de la part d'un opérateur ou d'un conducteur du véhicule.

9. Procédé (200) selon l'une quelconque des revendications précédentes, **caractérisé en ce que** l'étape préliminaire (204) et l'étape principale (212) sont réalisées par transfert d'énergie thermique vers un même fluide frigorifique.

10. Procédé (200) selon l'une quelconque des revendications précédentes, **caractérisé en ce que** le traitement d'air réalisé est un refroidissement ou un rafraîchissement d'air.

11. Système (300) de traitement de l'air dans l'habitacle d'un véhicule électrique (100), dans lequel l'ensemble de l'énergie pour le mouvoir est fourni par une source d'énergie électrique embarquée rechargeable depuis une source extérieure, ledit système comprenant :
- au moins une unité de traitement d'air électrique, et
- au moins une source d'énergie électrique alimentée par un réservoir de carburant fossile ;
configurés pour mettre en œuvre toutes les étapes du procédé selon l'une quelconque des revendications précédentes.

12. Système (300) selon la revendication précédente, **caractérisé en ce que** le traitement de l'air de l'habitacle est réalisé par l'intermédiaire d'un fluide frigorifique, ledit système (300) comprenant :
- un circuit (306) pour faire circuler ledit fluide dans l'habitacle du véhicule, et
- au moins un évaporateur (308), relié audit circuit (306).

13. Véhicule électrique (100) comprenant :
- un système (300) de traitement de l'air selon l'une quelconque des revendications 11 ou 12 ; ou
- des moyens pour mettre en œuvre toutes les étapes du procédé (200) selon l'une quelconque des revendications 1 à 10.

14. Véhicule électrique (100) selon la revendication précédente, **caractérisé en ce qu'**il s'agit d'un véhicule électrique terrestre de transport en commun.

15. Véhicule électrique (100) selon l'une quelconque des revendications 13 ou 14, **caractérisé en ce qu'**il s'agit d'un bus, d'un car ou d'un tram-bus.

## Patentansprüche

1. Verfahren (200) zur Klimatisierung der Luft in einem Fahrgastraum eines Elektrofahrzeugs (100), wobei die Gesamtheit der Energie, um es zu bewegen, von einer fahrzeugseitigen elektrischen Energiequelle geliefert wird, die durch eine externe Quelle wiederaufladbar ist, wobei das genannte Verfahren (200) umfasst:
- einen Schritt (204), der als einleitender Schritt bezeichnet wird und der eine Klimatisierung der Luft in mindestens einem Teil des genannten Fahrgastraums durch mindestens eine Vorrichtung (304, 308) zur Klimatisierung der Luft vornimmt, die von einer elektrischen Quelle (310) extern von dem genannten Fahrzeug (100) gespeist wird, wenn das genannte Fahrzeug (100) mit der genannten externen elektrischen Quelle verbunden ist, und
- einen Schritt (212), der als Hauptschritt bezeichnet wird und der eine Klimatisierung der Luft in dem genannten mindestens einen Teil des genannten Fahrgastraums durch mindestens eine Vorrichtung (304, 308) zur Klimatisierung der Luft vornimmt, welche von einer elektrischen Energiequelle gespeist wird, die von einem Tank (302) für fossilen Brennstoff gespeist wird, der in dem genannten Fahrzeug (100) untergebracht ist, während der Verwendung des genannten Fahrzeugs (100);
**dadurch gekennzeichnet, dass** der einleitende Schritt (204) eine Klimatisierung der Luft nur oder zuerst oder auch vorrangig in einer Fahrerzone des genannten Fahrzeugs (100) vornimmt.

2. Verfahren (200) nach dem vorhergehenden Anspruch, **dadurch gekennzeichnet, dass** es einen Schritt (202) zum Auslösen, insbesondere in einer Distanz von dem Fahrzeug (100), des einleitenden Schritts (204) umfasst.

3. Verfahren (200) nach einem der vorhergehenden Ansprüche, **dadurch gekennzeichnet, dass** der Hauptschritt (212) außerdem durch mindestens eine Batterie (116) des Fahrzeugs (100), zusätzlich zu der fahrzeugseitigen Quelle fossiler Energie (302), vorgenommen wird.

4. Verfahren (200) nach einem der vorhergehenden Ansprüche, **dadurch gekennzeichnet, dass** der einleitende Schritt (204) ohne Starten des Elektromotors oder der Elektromotoren des genannten Elektrofahrzeugs (100) vorgenommen wird.

5. Verfahren (200) nach einem der vorhergehenden Ansprüche, **dadurch gekennzeichnet, dass** der einleitende Schritt (204) automatisch in Abhängigkeit von mindestens einem der folgenden Parameter ausgelöst wird:
- einer vorbestimmten Zeit,
- einer vorbestimmten Dauer vor der Inbetriebnahme des genannten Fahrzeugs, zum Beispiel nach einer Ruhe/Garagierungsphase des Fahrzeugs,
- einer Außentemperatur,
- einer Innentemperatur in dem mindestens einen Teil des Fahrgastraums,
- einer Außenluftfeuchtigkeit,
- einer Innenluftfeuchtigkeit in dem mindestens einen Teil des Fahrgastraums.

6. Verfahren (200) nach einem der vorhergehenden Ansprüche, **dadurch gekennzeichnet, dass** der Hauptschritt (212) auf automatische Weise ausgelöst wird, wenn:
- der einleitende Schritt (204) angehalten wird,
- das Fahrzeug (100) sich in Bewegung setzt,
- das Fahrzeug (100) von der externen Energiequelle gelöst wird, und/oder
- die Temperatur, bzw. die Luftfeuchtigkeit, im Inneren des mindestens einen Teils des Fahrgastraums, der in dem einleitenden Schritt klimatisiert wurde, einen vorbestimmten Wert erreicht;
unmittelbar oder gegebenenfalls nach einer vorbestimmten Dauer nach mindestens einem dieser Ereignisse.

7. Verfahren (200) nach einem der vorhergehenden Ansprüche, **dadurch gekennzeichnet, dass** der einleitende Schritt (204) auf automatische Weise angehalten wird, wenn:
- der Hauptschritt (212) ausgelöst wird,
- das Fahrzeug (100) sich in Bewegung setzt,
- das Fahrzeug (100) von der externen Energiequelle gelöst wird, und/oder
- die Temperatur, bzw. die Luftfeuchtigkeit, im Inneren des mindestens einen Teils des Fahrgastraums, der in dem einleitenden Schritt klimatisiert wurde, einen vorbestimmten Wert erreicht;
unmittelbar oder gegebenenfalls nach einer vorbestimmten Dauer nach mindestens einem dieser Ereignisse.

8. Verfahren (200) nach einem der Ansprüche 1 bis 4, **dadurch gekennzeichnet, dass** das Auslösen des Hauptschritts (212), bzw. das Anhalten des einleitenden Schritts (204), von einer manuellen Bestätigung einer Bedienungsperson oder eines Fahrers des Fahrzeugs abhängig ist.

9. Verfahren (200) nach einem der vorhergehenden Ansprüche, **dadurch gekennzeichnet, dass** der einleitende Schritt (204) und der Hauptschritt (212) durch Wärmeenergietransfer zu demselben Kühlfluid vorgenommen werden.

10. Verfahren (200) nach einem der vorhergehenden Ansprüche, **dadurch gekennzeichnet, dass** die Klimatisierung der Luft durch eine Kühlung oder eine Auffrischung der Luft vorgenommen wird.

11. System (300) zur Klimatisierung der Luft in einem Fahrgastraum eines Elektrofahrzeugs (100), wobei die Gesamtheit der Energie, um es zu bewegen, von einer fahrzeugseitigen elektrischen Energiequelle geliefert wird, die durch eine externe Quelle wiederaufladbar ist, wobei das genannte System umfasst:
- mindestens eine elektrische Einheit zur Klimatisierung der Luft, und
- mindestens eine elektrische Energiequelle, die von einem Behälter für fossilen Brennstoff gespeist wird;
welche dafür ausgelegt sind, um alle Schritte des Verfahrens nach einem der vorhergehenden Ansprüche durchzuführen.

12. System (300) nach dem vorhergehenden Anspruch, **dadurch gekennzeichnet, dass** die Klimatisierung der Luft in dem Fahrgastraum mit Hilfe eines Kühlfluids vorgenommen wird, wobei das genannte System (300) umfasst:
- einen Kreislauf (306), um das genannte Fluid in dem Fahrgastraum des Fahrzeugs zirkulieren zu lassen, und
- mindestens einen Verdampfer (308), der mit dem genannten Kreislauf (306) verbunden ist.

13. Elektrofahrzeug (100), umfassend:
- ein System (300) zur Klimatisierung der Luft nach einem der Ansprüche 11 oder 12; oder
- Mittel zum Durchführen aller Schritte des Verfahrens (200) nach einem der Ansprüche 1 bis 10.

14. Elektrofahrzeug (100) nach dem vorhergehenden Anspruch, **dadurch gekennzeichnet, dass** es sich um ein Landelektrofahrzeug des öffentlichen Verkehrs handelt.

15. Elektrofahrzeug (100) nach einem der Ansprüche 13 oder 14, **dadurch gekennzeichnet, dass** es sich um einen Bus, einen Reisebus oder eine Straßenbahn handelt.

## Claims

1. A method (200) of conditioning the air in the passenger compartment of an electric vehicle (100) in which all of the energy for the movement thereof is supplied by an on-board electrical energy source chargeable from an external source, said method (200) comprising:
- a step (204), called preliminary step, carrying out a conditioning of the air in at least one part of said passenger compartment by at least one air conditioning device (304, 308) supplied by an electrical source (310) external to said vehicle (100), when said vehicle (100) is connected to said external electrical source, and
- a step (212), called main step, carrying out a conditioning of the air in said at least one part of said passenger compartment by at least one air conditioning device (304, 308) supplied by an electrical energy source supplied by a fossil fuel tank (302) on board said vehicle (100), during use of said vehicle (100);
**characterized in that** the preliminary step (204) carries out air conditioning only, or firstly, or even as a priority, in a driver's area of said vehicle (100).

2. The method (200) according to the preceding claim, **characterized in that** it comprises a step (202) of initiating the preliminary step (204), in particular at a distance from the vehicle (100).

3. A method (200) according to any one of the preceding claims, **characterized in that** the main step (212) is in addition carried out from at least one battery (116) of the vehicle (100), in addition to the on-board fossil fuel-based electricity source (302).

4. The method (200) according to any one of the preceding claims, **characterized in that** the preliminary step (204) is carried out without starting the electric motor or motors of said electric vehicle (100).

5. The method (200) according to any one of the preceding claims, **characterized in that** the preliminary step (204) is initiated automatically depending on at least one of the following parameters:
- a predetermined time,
- a predetermined period before said vehicle is collected, for example following an inactive/garaged phase of the vehicle,
- an external temperature,
- an internal temperature in at least one part of the passenger compartment,
- an external humidity level, and
- an internal humidity level in at least one part of the passenger compartment.

6. The method (200) according to any one of the preceding claims, **characterized in that** the main step (212) is initiated automatically when:
- the preliminary step (204) is stopped,
- the vehicle (100) begins to move,
- the vehicle (100) is disconnected from the external electrical source, and/or
- the temperature, respectively the humidity level, inside the at least one part of the passenger compartment which was conditioned during the preliminary step reaches a predetermined value;
immediately or optionally after a predetermined period following at least one of these events.

7. The method (200) according to any one of the preceding claims, **characterized in that** the preliminary step (204) is stopped automatically when:
- the main step (212) is initiated,
- the vehicle (100) begins to move,
- the vehicle (100) is disconnected from the external electrical source, and/or
- the temperature, respectively the humidity level, inside the at least one part of the passenger compartment which was conditioned during the preliminary step reaches a predetermined value;
immediately or optionally after a predetermined period following at least one of these events.

8. The method (200) according to any one of claims 1 to 4, **characterized in that** the initiation of the main step (212), respectively the stopping of the preliminary step (204), is conditional on manual confirmation by an operator or a driver of the vehicle.

9. The method (200) according to any one of the preceding claims, **characterized in that** the preliminary step (204) and the main step (212) are carried out by heat energy transfer to one and the same refrigerant.

10. The method (200) according to any one of the preceding claims, **characterized in that** the air conditioning carried out is a cooling or refreshing of air.

11. A system (300) for conditioning air in the passenger compartment of an electric vehicle (100) in which all of the energy for the movement thereof is supplied by an on-board electrical energy source which can be recharged from an external source, said system comprising:
- at least one electrical air conditioning unit, and
- at least one electrical energy source supplied by a fossil fuel tank;
configured in order to implement all the steps of the method according to any one of the preceding claims.

12. The system (300) according to the preceding claim, **characterized in that** the conditioning of the air in the passenger compartment is carried out via a refrigerant, said system (300) comprising:
- a circuit (306) for circulating said fluid in the passenger compartment of the vehicle, and
- at least one evaporator (308), connected to said circuit (306).

13. An electric vehicle (100) comprising:
- a system (300) for conditioning the air according to any one of claims 11 or 12; or
- means for implementing all the steps of the method (200) according to any one of claims 1 to 10.

14. The electric vehicle (100) according to the preceding claim, **characterized in that** it relates to an electric public transport land vehicle.

15. The electric vehicle (100) according to any one of claims 13 or 14, **characterized in that** it relates to a bus, a coach or a tyred tram.
